# EUROPÄISCHE PATENTSCHRIFT

(11) **EP 2 183 328 B1**
(45) Veröffentlichungstag und Bekanntmachung des Hinweises auf die Patenterteilung: **24.12.2014**
(21) Anmeldenummer: 08784980.8
(22) Anmeldetag: 23.07.2008
(51) Int. Cl.: B01F 17/00, C09D 17/00

(54) **WÄSSRIGE PIGMENTPRÄPARATIONEN MIT NICHTIONISCHEN ADDITIVEN AUF ALLYL- UND VINYLETHERBASIS**
AQUEOUS PIGMENT PREPARATIONS HAVING NONIONIC ADDITIVES ON THE BASIS OF ALYL AND VINYL ETHER
PRÉPARATIONS DE PIGMENTS AQUEUX COMPORTANT DES ADDITIFS NON IONIQUES À BASE D'ÉTHER DE VINYLE ET D'ALLYLE

(30) Priorität: 23.08.2007 DE 102007039781
(43) Veröffentlichungstag der Anmeldung: 12.05.2010
(73) Patentinhaber: Clariant Finance (BVI) Limited, Road Town, Tortola (VG)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Mikulecky, Klaus
(86) Internationale Anmeldenummer: PCT/EP2008/006021
(87) Internationale Veröffentlichungsnummer: WO 2009/024233

(56) Entgegenhaltungen:
- EP-A- 1 142 972
- EP-A- 1 270 624
- WO-A-93/03099
- WO-A-95/00565
- DE-A1-102004 054 034
- US-A- 5 859 092
- DATABASE WPI Week 198304 Thomson Scientific, London, GB; AN 1983-08493k XP002501887 & JP 57 202311 A (NIPPON SHOKUBAI) 11. Dezember 1982 (1982-12-11)

## Beschreibung

Gegenstand der vorliegenden Erfindung sind wässrige Pigmentpräparationen enthaltend neuartige nichtionische Polymere als Dispergiermittel, sowie ihre Verwendung zum Einfärben von natürlichen und synthetischen Materialien.

Für die Dispergierung von Pigmenten im flüssigen Medium sind üblicherweise Dispergiermittel notwendig. Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

Im Stand der Technik sind auch Pigmentpräparationen beschrieben, die geordnete Polymerstrukturen enthalten. Beispiele dafür sind EP 1 293 523, DE 10 2005 012 315 und EP 1 721 941.

Die früher gebräuchlichen Novolakdispergiermittel enthalten als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichern sie sich an. Dies ist problematisch, da sie auf Wasserorganismen eine hormonelle Wirkung zeigen. Daher wurden in vielen Ländern Rechtsvorschriften erlassen (z. B. 2003/53/EC), die den Einsatz von Stoffen, die Alkylphenole bzw. ihre Ethoxylate enthalten, in offenen Stoffkreisläufen beschränken bzw. verbieten.

Bisherige Untersuchungen haben gezeigt, dass es nach wie vor außerordentlich schwierig ist, Dispergiermittel zu synthetisieren, die nichtionischen Novolaksystemen in ihrer Performance äquivalent sind.

Gefordert sind demnach neue Dispergiermittel, die organische Pigmente in hoher Konzentration von über 40 % niederviskos dispergieren können. Die Dispersionen müssen leicht herstellbar sein, d .h. die Pigmente müssen leicht benetzbar und leicht ins wässrige Medium einarbeitbar sein. Die Dispersion muss eine hohe und reproduzierbare Farbstärke aufweisen und diese über einen Zeitraum von mehreren Jahren stabil halten. Ebenfalls sollten alle weiteren coloristischen Parameter wie z. B. der Bunttonwinkel und die Reinheit reproduzierbar und stabil sein. Weiterhin muss die Dispersion über eine niedrige Viskosität verfügen; die Pigmente dürfen weder agglomerieren noch flockulieren, noch dürfen sie aufschwimmen oder sedimentieren. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d .h. es darf sich unter Scherung nicht die Farbstärke oder Coloristik ändern und die Dispersion muss unter diesen Bedingungen flockulationsstabil bleiben.

Überraschenderweise wurde gefunden, dass spezielle nichtionische Kammcopolymere, die mit Hilfe von Makromonomeren aus Polyethylen-/Polypropylenglykol-Monovinylethern oder -Allylethern hergestellt werden, diese Aufgabe erfüllen.

Gegenstand der vorliegenden Erfindung sind wässrige Pigmentpräparationen, enthaltend
(A) mindestens ein organisches und/oder anorganisches Pigment,
(B) ein Dispergiermittel der Formel (I), (II), (III) oder (IV) oder Mischungen der Dispergiermittel der Formeln (I), (II), (III) oder (IV) 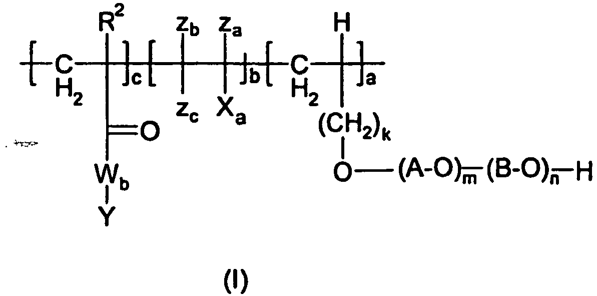 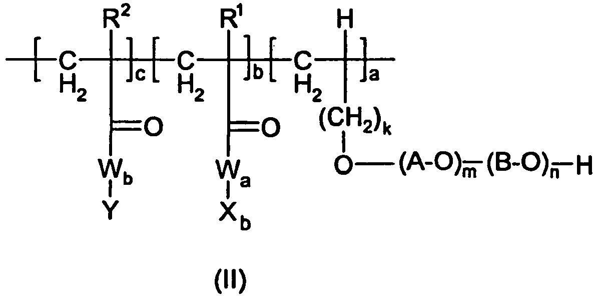 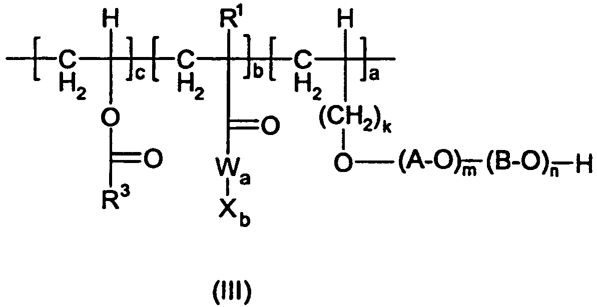 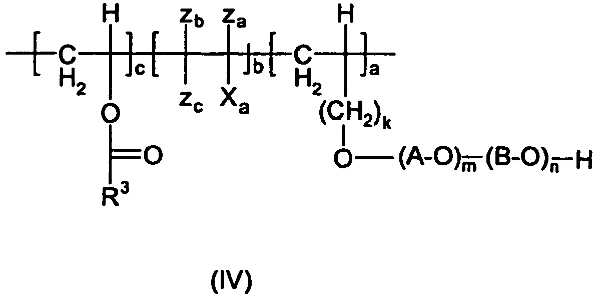 wobei die Indices a, b und c den molaren Anteil des jeweiligen Monomeren angeben:
   a = 0,01 bis 0,8, bevorzugt 0,1 bis 0,7;
   b = 0,001 bis 0,8, bevorzugt 0,1 bis 0,6;
   c = 0,001 bis 0,8, bevorzugt 0,1 bis 0,6;
   wobei die Summe aus a + b + c gleich 1 ist,
      - A: für C₂- bis C₄-Alkylen und
      - B: für ein von A unterschiedliches C₂- bis C₄-Alkylen steht,
      - k: der Zahl 0 oder 1 entspricht,
      - m: eine Zahl von 0 bis 500, vorzugsweise 0 bis 50, ist;
      - n: eine Zahl von 0 bis 500, vorzugsweise 0 bis 50, ist,
      wobei die Summe m + n gleich 1 bis 1000 ist;
      - Xₐ: für einen aromatischen oder araliphatischen Rest mit 3 bis 30 C-Atomen steht, der gegebenenfalls eines oder mehrere der Heteroatome N, O und S enthält,
      - Zₐ: für H oder (C₁-C₄)-Alkyl steht,
      - Z_{b}: für H oder (C₁-C₄)-Alkyl steht,
      - Z_{c}: für H oder (C₁-C₄)-Alkyl steht;
      - R¹: für Wasserstoff oder Methyl steht,
      - X_{b}: für einen aromatischen oder araliphatischen Rest mit 3 bis 30 C-Atomen steht, der gegebenenfalls eines oder mehrere der Heteroatome N, O und S enthält,
      - Wₐ: für Sauerstoff oder die Gruppe NH steht,
      - R²: für Wasserstoff oder Methyl steht,
      - Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
      - W_{b}: für Sauerstoff oder die Gruppe NH steht;
(C) gegebenenfalls Benetzer,
(D) gegebenenfalls weitere Tenside und/oder Dispergiermittel,
(E) gegebenenfalls ein oder mehrere organische Lösemittel und/oder eine oder mehrere hydrotrope Substanzen,
(F) gegebenenfalls weitere zur Herstellung wässriger Pigmentdispersionen übliche Zusatzstoffe, und
(G) Wasser.

Bevorzugte Pigmentpräparationen enthalten 5 bis 80 Gew.-%, beispielsweise 10 bis 70 Gew.-%, an Komponente (A).

Bevorzugte Pigmentpräparationen enthalten 0,1 bis 30 Gew.-%, beispielsweise 2 bis 15 Gew.%, an Komponente (B).

Besonders bevorzugte Pigmentpräparationen enthalten an Komponente
(A) 5 bis 80 Gew.%, beispielsweise 10 bis 70 Gew.%,
(B) 0,1 bis 30 Gew.-%, beispielsweise 2 bis 15 Gew.-%,
(C) 0 bis 10 Gew.-%, beispielsweise 0,1 bis 5 Gew.-%,
(D) 0 bis 20 Gew.-%, beispielsweise 1 bis 10 Gew.-%,
(E) 0 bis 30 Gew.-%, beispielsweise 5 bis 20 Gew.-%,
(F) 0 bis 20 Gew.-%, beispielsweise 0,1 bis 5 Gew.-%,
(G) 1 bis 90 Gew.-% Wasser, beispielsweise 10 bis 70 Gew.-%,
jeweils bezogen auf das Gesamtgewicht (100 Gew.-%) der Pigmentpräparation.

Im Falle dass eine oder mehrere der Komponenten (C), (D), (E) und (F) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Gemisch verschiedener organischer und/oder anorganischer Pigmente. Die Komponente (A) kann auch ein Farbstoff sein, der in bestimmten Lösemitteln löslich ist und in anderen Lösemitteln Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen.

Ferner eignen sich verlackte Farbstoffe wie Ca-, Mg-, AI-Lacke von sulfonsäure- und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Die Copolymere (Komponente B) besitzen ein Molekulargewicht von 10³g/mol bis 10⁹ g/mol, besonders bevorzugt von 10³ bis 10⁷ g/mol, insbesondere bevorzugt 10³ bis 10⁵ g/mol.

Diese Polymere können durch radikalische Polymerisation von Monomeren entsprechend den in den Klammern [ ]_{c}, [ ]_{b} und [ ]ₐ beschriebenen Resten in Formel (I), (II), (III) oder (IV) hergestellt werden. Die Bedingungen zur Durchführung der radikalischen Polymerisation sind dem Fachmann bekannt.

Bevorzugte Monomere der Gruppe [ ]ₐ sind solche, worin A Ethylen und B Propylen, oder A Propylen und B Ethylen bedeuten.

Die Alkylenoxideinheiten (A-O)ₘ und (B-O)ₙ können entweder statistisch oder wie im Falle einer bevorzugten Ausführungsform blockartig angeordnet vorliegen.

Die Summe der Alkylenoxideinheiten kann prinzipiell n + m = 1 bis 1000 sein, bevorzugt ist 1 bis 500, insbesondere 2 bis 100, besonders bevorzugt 5 bis 100.

Zu den Monomeren der Gruppe [ ]_{b} gehören beispielsweise die folgenden Ester und Amide der Acrylsäure und Methacrylsäure: Phenyl, Benzyl, Tolyl, 2-Phenoxyethyl, Phenethyl.

Weitere Monomere der Gruppe [ ]_{b} sind vinylaromatische Monomere wie Styrol und seine Derivate wie beispielsweise Vinyltoluol, α-Methylstyrol. Bei der aromatischen Einheit kann es sich auch um Heteroaromaten handeln, wie z. B. in 1-Vinylimidazol.

Besonders bevorzugte Monomere der Gruppe [ ]_{b} können sein: Styrol, 1-Vinylimidazol, Benzylmethacrylat, 2-Phenoxyethylmethacrylat und Phenethylmethacrylat.

Zu den Monomeren der Gruppe [ ]_{c} gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Octyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Des weiteren gehören zu den Monomeren der Gruppe [ ]_{c} die Vinylester der Carbonsäuren, wie beispielsweise Laurinsäurevinylester, Myristinsäurevinylester, Stearinsäurevinylester, Behensäure-, Pivalinsäure-, Neohexansäure-, Neoheptansäure-, Neooctansäure-, Neononansäure- und Neodecansäurevinylester. Hierbei können ebenfalls die Vinylester aus Gemischen derartiger Carbonsäuren eingesetzt werden.

Bevorzugte Monomere der Gruppe [ ]_{c} sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl-, besonders bevorzugt 2-Ethylhexyl- und Lauryl-.

Als Komponente (C) werden meist kationische, anionische, amphotere oder nicht ionogene Verbindungen verwendet, die die Pigmentbenetzung fördern (Netzmittel, Benetzer), beispielsweise Alkylsulfate wie z. B. Laurylsulfat, Alkylbenzolsulfonsäure, kurzkettige Alkoxylierungsprodukte wie z. B. Laurylalkohol umgesetzt mit etwa 5 Mol Ethylenoxid oder Alkindiole.

Als Komponente (D) der erfindungsgemäßen Pigmentpräparationen dienen übliche, zur Herstellung wässriger Pigmentdispersionen geeignete Dispergiermittel und Tenside oder Gemische solcher Substanzen. Üblicherweise werden anionische, kationische, amphotere oder nichtionische grenzflächenaktive Verbindungen verwendet, wie sie in der DE-A-10 2007 021 870 beschrieben sind. Der Komponente (E) entsprechen organische Lösemittel oder wasserlösliche hydrotrope Substanzen. Hydrotrope Verbindungen, die gegebenenfalls auch als Lösemittel dienen, oder oligomerer oder polymerer Natur sind, sind beispielsweise Formamid, Harnstoff, Tetramethylharnstoff, ε-Caprolactam, Ethylenglykol, Propylenglykol, Diethylenglykol, Triethylenglykol, Polyethylenglykol, α-Methyl-ω-hydroxy-polyethylenglykolether, Dimethylpolyethylenglykolether, Dipropylenglykol, Polypropylenglykol, Dimethylpolypropylenglykolether, Copolymere aus Ethylen- und Propylenglykol, Butylglykol, Methylcellulose, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Cellulosederivate, Gelatinederivate, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Als Komponente (F) werden beispielsweise Verdicker, Konservierungsmittel, Viskositätsstabilisatoren, Mahlhilfsmittel und Füllstoffe eingesetzt. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen. Als Mittel zur Regulierung der Viskosität kommen z.B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Der Komponente (F) können auch Fette und Öle pflanzlicher und tierischer Herkunft entsprechen, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z. B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (G), wird vorzugsweise in Form von entsalztem oder destilliertem Wasser eingesetzt. Auch Trinkwasser (Leitungswasser) und/oder Wasser natürlichen Ursprungs kann verwendet werden.

Gegenstand der vorliegenden Erfindung ist auch ein Verfahren zur Herstellung der erfindungsgemäßen Pigmentpräparationen, dadurch gekennzeichnet, dass man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltene wässrige Pigmentdispersion mit Wasser (G) verdünnt. Vorzugsweise werden die Komponenten (B) und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird. Je nach Kornhärte der Komponente (A) wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperimühlen verwendet werden. Die Feindispergierung bzw. Mahlung der Komponente (A) erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser (G), vorzugsweise entionisiertem oder destilliertem Wasser, weiter verdünnt werden.

Die erfindungsgemäßen Pigmentpräparationen eignen sich zum Pigmentieren und Färben von natürlichen und synthetischen Materialien aller Art, insbesondere von wässrigen Anstrichmitteln, Dispersions- und Lackfarben (Dispersionslacken). Ferner eignen sich die erfindungsgemäßen Pigmentpräparationen zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck-oder Tiefdruckfarben, Tapetenfarben, wasserverdünnbaren Lacken, Holzschutzsystemen, Viskose-Spinnfärbungen, Lacken, auch Pulverlacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten können Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d. h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Außerdem sind die erfindungsgemäßen Pigmentpräparationen als Farbmittel in Tinten, vorzugsweise Ink-Jet Tinten, wie z. B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet.

Außerdem können die erfindungsgemäßen Pigmentpräparationen auch als Farbmittel für Farbfilter ("Color Filter") für "Flat Panel Displays", sowohl für die Additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper") eingesetzt werden.

### Beispiele

### Herstellung der Dispergiermittel (B):

### Synthesevorschrift 1

In einem Kolben mit Rührer, Rückflusskühler, Innenthermometer und Stickstoffeinleitung wurde das Monomer A, Monomer C und ggf. der Molekulargewichtsregler in Lösungsmittel unter Stickstoffeinleitung vorgelegt. Dann wurde die Temperatur unter Rühren auf 80 °C gebracht und innerhalb einer Stunde eine Lösung des Initiators zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

### Synthesevorschrift 2

In einem Kolben mit Rührer, Rückflusskühler, Innenthermometer und Stickstoffeinleitung wurde das Monomer A, Monomer C und ggf. der Molekulargewichtsregler und Komponente 1 (Ascorbinsäure) des Redoxinitiatorsystems in Lösungsmittel unter Stickstoffeinleitung vorgelegt. Dann wurde die Temperatur unter Rühren auf 80 °C gebracht und innerhalb von drei Stunden eine Lösung der Komponente 2 (t-BuOOH) des Redoxinitiatorsystems zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

Die folgenden drei Tabellen enthalten Synthesebeispiele analog den obigen zwei allgemeinen Synthesevorschriften.

AMBN = 2,2'-Azobis(2-methylbutyronitril)

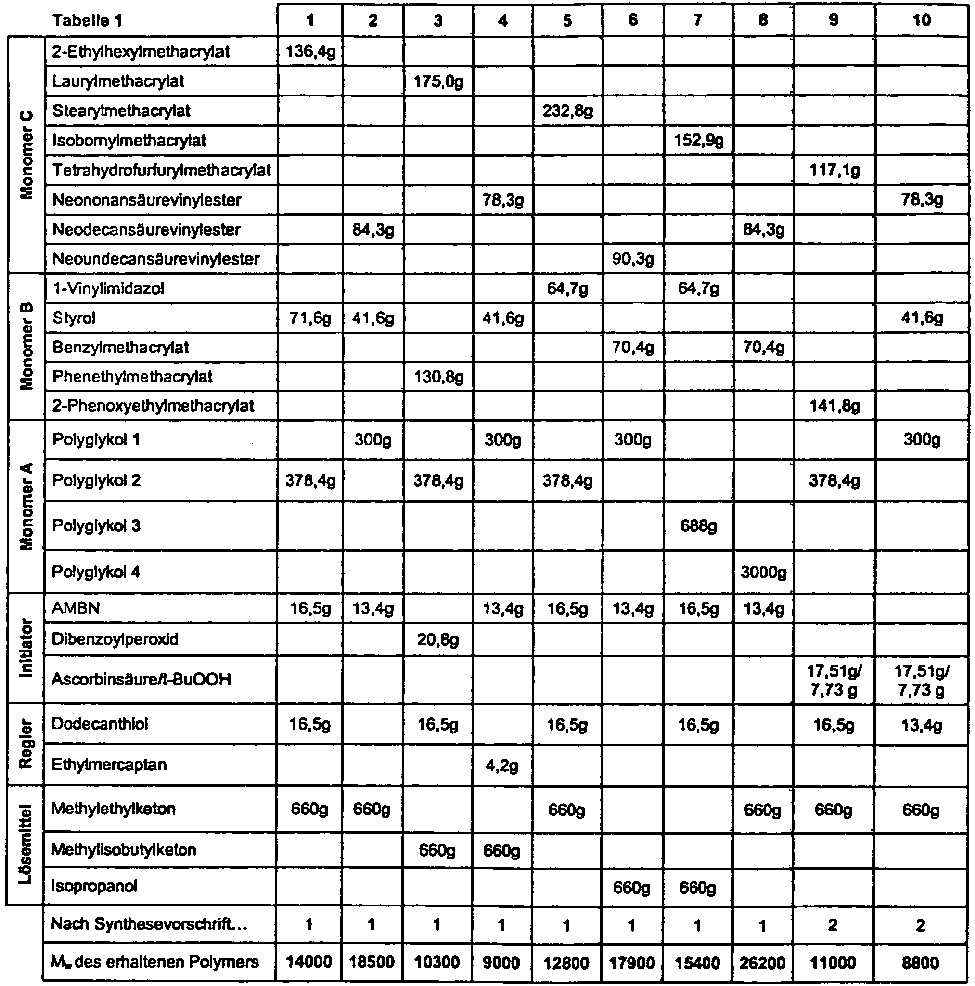

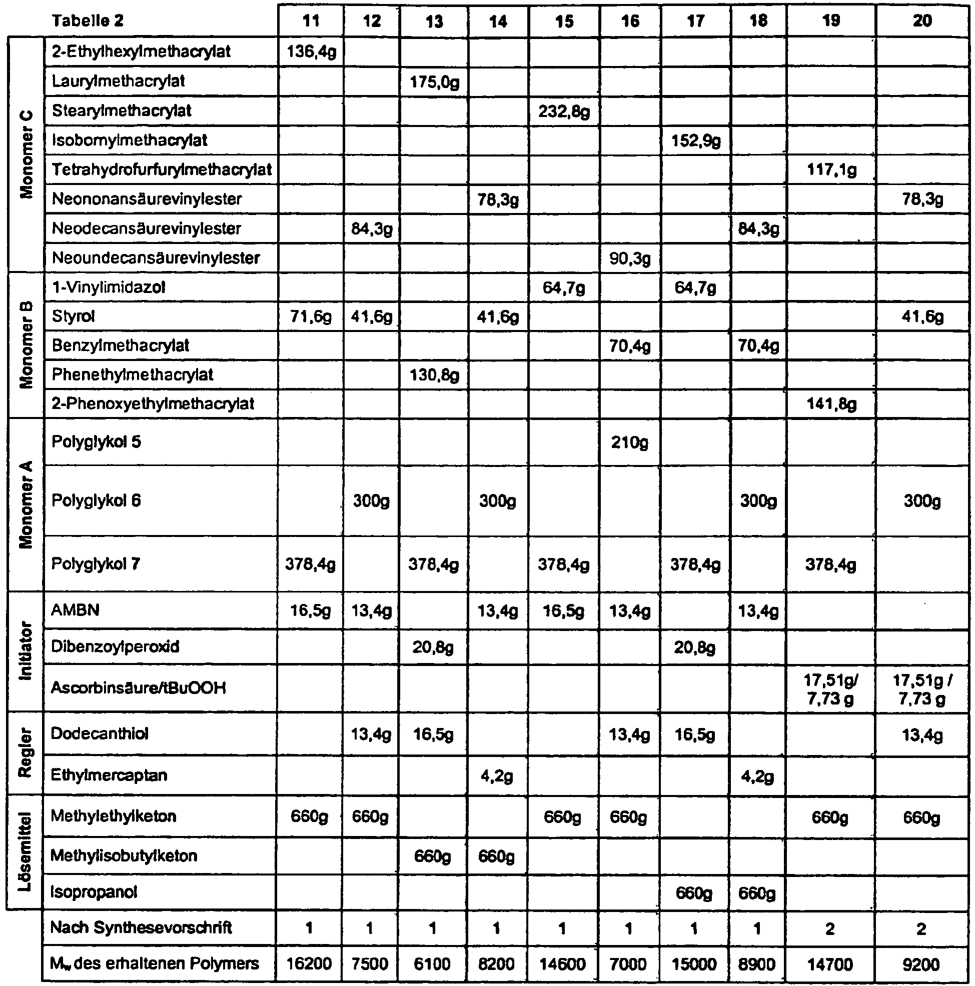

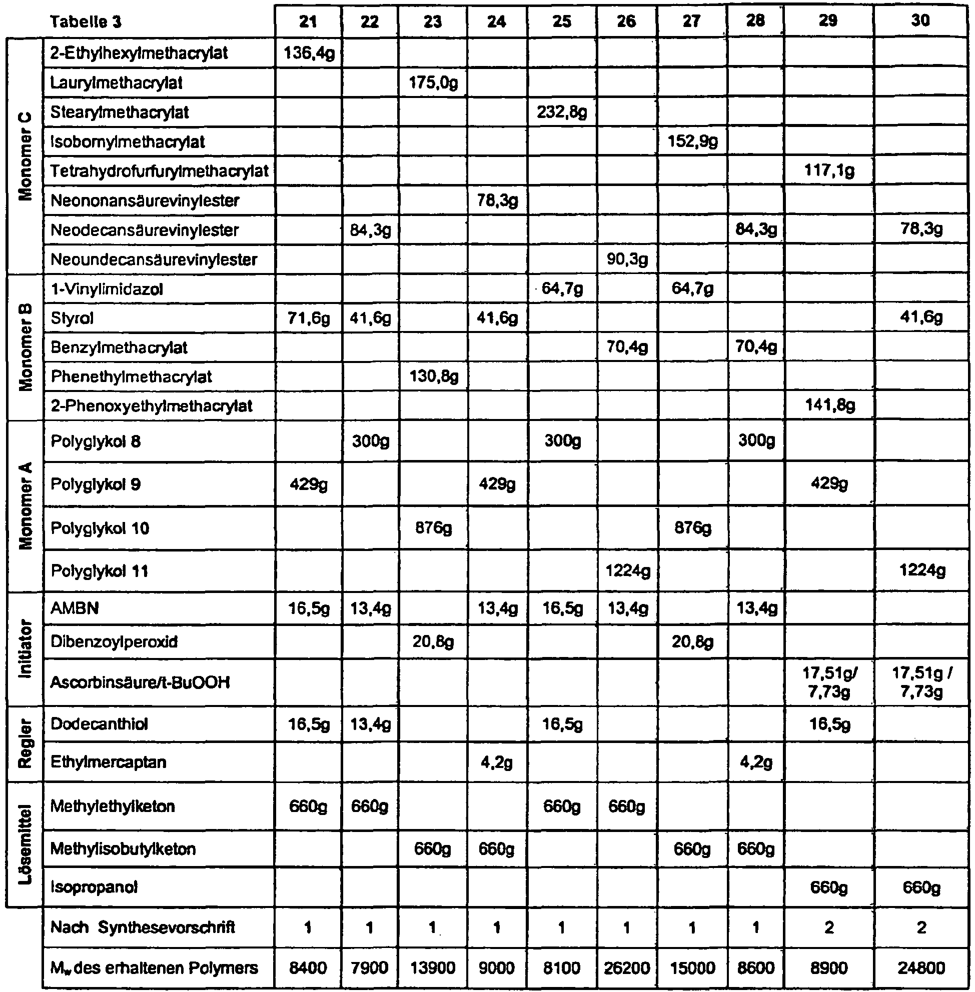

### Monomer A aus Tabelle 1 bis 3:

- Polyglykol 1: Polyalkylenglykolmonovinylether (Formel (I), k = 0, n = 0, m = 11,5; (A-O) entspricht (CH₂CH₂O)), Molmasse ca. 550 g/mol
- Polyglykol 2: Polyalkylenglykolmonovinylether (Formel (I), k = 0, n = 0, m = 24; (A-O) entspricht (CH₂CH₂O)), Molmasse ca. 1100 g/mol
- Polyglykol 3: Polyalkylenglykolmonovinylether (Formel (I), k = 0, n = 0, m = 44,5; (A-O) entspricht (CH₂CH₂O)), Molmasse ca. 2000 g/mol
- Polyglykol 4: Polyalkylenglykolmonovinylether (Formel (I), k = 0, n = 0, m = 135,4; (A-O) entspricht (CH₂CH₂O)), Molmasse ca. 6000 g/mol
- Polyglykol 5: Polyalkylenglykolmonoallylether (Formel (I), k = 1, n = 0, m = 6,6; (A-O) entspricht (CH₂CH₂O)), Molmasse ca. 350 g/mol
- Polyglykol 6: Polyalkylenglykolmonoallylether (Formel (I), k = 1, n = 0, m = 10; (A-O) entspricht (CH₂CH₂O)), Molmasse ca. 500 g/mol
- Polyglykol 7: Polyalkylenglykolmonoallylether (Formel (I), k = 1, n = 0, m = 21,4; (A-O) entspricht (CH₂CH₂O)), Molmasse ca. 1000 g/mol
- Polyglykol 8: Polyalkylenglykolmonoallylether (Formel (I), k = 1, Verhältnis Ethylenoxid/Propylenoxid 6:4 (statistisch polymerisiert), Molmasse ca. 500 g/mol
- Polyglykol 9: Polyalkylenglykolmonoallylether (Formel (I), k = 1, Verhältnis Ethylenoxid (B-O)/Propylenoxid (A-O) 11:4 (Blockcopolymer), Molmasse ca. 750 g/mol
- Polyglykol 10: Polyalkylenglykolmonoallylether (Formel (I), k = 1, Verhältnis Ethylenoxid (B-O)/Propylenoxid (A-O) 20:10 (Blockcopolymer), Molmasse ca. 1500 g/mol

- Polyglykol 11: Polyalkylenglykolmonoallylether (Formel (I), k = 1, Verhältnis Ethylenoxid/Propylenoxid 20:20 (statistisch polymerisiert), Molmasse ca. 2100 g/mol

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

### Beurteilung einer Pigmentpräparation:

Die Bestimmung der Farbstärke und des Farbtons erfolgte nach DIN 55986. Für den "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit den einzufärbenden Medien wurden mit 5 verschiedenen Weißdispersionen ermittelt:
1. Weißdispersion A (für Außenanstriche, Wasserbasis, 20 % TiO₂)
2. Weißdispersion B (für Außenanstriche, Wasserbasis, 13,4 % TiO₂)
3. Weißdispersion C (für Außenanstriche, Wasserbasis, Bindemittel Polysiloxanemulsion, TiO₂, Talkum, Calciumcarbonat)
4. Weißdispersion D (für Innenanstriche, Wasserbasis, Polymerdispersion, frei von Lösemittel und Weichmachern, emissionsarm, TiO₂, Calciumcarbonat)
5. Weißdispersion E (für Innenanstriche, Wasserbasis, Polyacrylate, TiO₂, Calciumcarbonat)

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach vierwöchiger Lagerung bei 50 °C.

Die Scherstabilität und das Schaumverhalten wurden nach Scherung einer auf 2 % verdünnten Präparation mit einem handelsüblichen Küchenmixer (Braun MX 32) unter Einstellung einer hohen Rotationsgeschwindigkeit beobachtet. Je scherstabiler die Präparation ist, desto geringer ist der Farbstärkeabfall nach Scherung im Vergleich der Farbstärke einer gescherten zu einer ungescherten Dispersion. Nach Abstellen des Mixers wurde das Schaumverhalten beobachtet.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile. Es gilt das folgende allgemeine Rezept:

| | |
|---|---|
| X Teile | Komponente (A), Pigment |
| Y Teile | Komponente (B), Dispergiermittel entsprechend der Formel (I), (II), (III) oder (IV), die Nr. des Synthesebeispiels ist in der Tabelle angegeben |
| 1 Teil | Komponente (C), Laurylsulfat |
| 9 Teile | Komponente (E), Propylenglykol |
| 0,2 Teile | Komponente (F), Konservierungsmittel |
| Rest | Komponente (G), Wasser |

Die jeweiligen Anteile an X und Y sind in den folgenden Tabellen angegeben. FS = Farbstärke, Komp. = Komponente, P. = Pigment.

| **Pigmentpräparation Nr.** | **Zusammensetzung** | **Testergeb. nisse Weißdispersion A** | **Testergebnisse Weißdispersion** B | **Testergebnisse Weißdispersion C** | **Testergebnisse Weißdispersion D** | **Testergebnisse Weißdispersion E** | **Scherstabilität** | **Schaumverhalten** | **Viskosität nach Herstellung** | **Lagerstabilität** |
|---|---|---|---|---|---|---|---|---|---|---|
| 1 | 50 Teile P. Blue 15 (Komp. A); 8 Teile Komp. B aus Synthesebeispiel 9 | FS 101 %, kein Rubout, keine Flockulation | FS 105 %, kein Rubout, keine Flockulation | FS 100 %, kein Rubout, keine Flockulation | FS 107 %, kein Rubout, keine Flockulation | FS 100 %, kein Rubout, keine Flockulation | sehr gut | Kein signifikanter Schaum beobachtet | 573 mPas | sehr gut |
| 2 | 40 Teile P. Black 7 (Komp. A); 6 Teile Komp. B aus Synthesebeispiel 2 | FS 99 %, leichter Rub-out, geringe Flockulation | FS 100 %, kein Rubout, keine Flockulation | FS 106 %, kein Rubout, keine Flockulation | FS 100 %, leichter Rubout, keine Flockulation | FS 98 %, kein Rubout, keine Flockulation | sehr gut | Kein signifikanter Schaum beobachtet | 346 mPas | gut |
| 3 | 42 Teile P. Red 12 (Komp. A); 8 Teile Komp. B aus Synthesebeispiel 19 | FS 103 %, kein Rubout, keine Flockulation | FS 103 %, kein Rubout, geringe Flockulation | FS 99 %, kein Rubout, keine Flockulation | FS 105 %, kein Rubout, keine Flockulation | FS 101 %, kein Rubout, keine Flockulation | gut | Kein signifikanter Schaum beobachtet | 610 mPas | sehr gut |
| 4 | 45 Teile P. Green 7 (Komp. A); 8 Teile Komp. B aus Synthesebeispiel 16 | FS 102 %, kein Rubout, keine Flockulation | FS 100 %, leichter Rubout, keine Flockulation | FS 99 %, kein Rubout, leichte Flockulation | FS 103 %, kein Rubout, keine Flockulation | FS 100 %, kein Rubout, keine Flockulation | sehr gut | Kein signifikanter Schaum beobachtet | 492 mPas | sehr gut |
| 5 | 50 Teile P. Red 112 (Komp. A); 8 Teile Komp. B aus Synthesebeispiel 26 | FS 99 %, kein Rubout, keine Flockulation | FS 95 %, kein Rubout, keine Flockulation | FS 105 %, kein Rubout, keine Flockulation | FS 101 %, kein Rubout, keine Flockulation | FS 105 %, kein Rubout, keine Flockulation | sehr gut | Geringfügiges Schäumen beobachtet | 344 mPas | sehr gut |
| 6 | 40 Teile P. Red 168 (Komp. A); 9 Teile Komp. B aus Synthesebeispiel 5 | FS 102 %, kein Rubout, keine Flockulation | FS 103 %, leicher Rubout, keine Flockulation | FS 102 %, kein Rubout, keine Flockulation | FS 104 %, geringer Rubout, keine Flockulation | FS 103 %, kein Rubout, keine Flockulation | sehr gut | Kein signifikanter Schaum beobachtet | 407 mPas | gut |

| **Pigment-präparation Nr.** | **Zusammensetzung** | **Testergebnisse Weißdispersion A** | **Testergebnisse Weißdispersion B** | **Testergebnisse Weißdispersion C** | **Testergebnisse Weißdispersion D** | **Testergebnisse Weißdispersion E** | **Scherstabilität** | **Schaumverhalten** | **Viskosität nach Herstellung** | **Lagerstabilität** |
|---|---|---|---|---|---|---|---|---|---|---|
| 7 | 50 Teile P. Yellow 1 (Komp. A); 10 Teile Komp. B aus Synthesebeispiel 13 | FS 100 %, kein Rubout, keine Flockulation | FS 100 %, kein Rubout, geringe Flockulation | FS 102 %, kein Rubout, keine Flockulation | FS 101 %, kein Rubout, keine Flockulation | FS 97 %, kein Rubout, keine Flockulation | sehr gut | Kein signifikanter Schaum beobachtet | 264 mPas | sehr gut |
| 8 | 40 Teile P. Yellow 83 (Komp. A); 7 Teile Komp. B aus Synthesebeispiel 22 | FS 95 %, kein Rubout, keine Flockulation | FS 98 %, kein Rubout, keine Flockulation | FS 98 %, kein Rubout, keine Flockulation | FS 102 %, kein Rubout, keine Flockulation | FS 98 %, kein Rubout, keine Flockulation | gut | Geringfügiges Schäumen beobachtet | 224 mPas | sehr gut |
| 9 | 45 Teile P. Blue 15:1 (Komp. A); 6 Teile Komp. B aus Synthesebeispiel 30 | FS 104 %, kein Rubout, keine Flockulation | FS 100 %, kein Rubout, keine Flockulation | FS 103 %, kein Rubout, keine Flockulation | FS 102 %, kein Rubout, keine Flockulation | FS 102 %, kein Rubout, sehr geringe Flockulation | sehr gut | Kein signifikanter Schaum beobachtet | 205 mPas | sehr gut |
| 10 | 40 Teile P. Red 5 (Komp. A); 8 Teile Komp. B aus Synthesebeispiel 15 | FS 99 %, kein Rubout, keine Flockulation | FS 94 %, kein Rubout, keine Flockulation | FS 103 %, kein Rubout, keine Flockulation | FS 107 %, geringer Rubout, keine Flockulation | FS 99 %, kein Rubout, keine Flockulation | gut | Wenige Schaumblasen beobachtet | 658 mPas | ausreichend gut |
| 11 | 65 Teile P. White 6 (Komp. A); 8 Teile Komp. B aus Synthesebeispiel 1 | 103 % relatives Aufhellungsvermögen in Dispersionsfarbe Schwarz | - | - | - | - | sehr gut | Kein signifikanter Schaum beobachtet | 1494 mPas | sehr gut |
| 12 | 47 Teile P. Blue 15:3 (Komp. A); 7,5 Teile Komp. B aus Synthesebeispiel 12 | FS 100 %, kein Rubout, keine Flockulation | FS 100 %, kein Rubout, keine Flockulation | FS 100 %, kein Rubout, keine Flockulation | FS 102 %, kein Rubout, keine Flockulation | FS 100 %, kein Rubout, keine Flockulation | sehr gut | Kein signifikanter Schaum beobachtet | 210 mPas | sehr gut |
| 13 | 40 Teile P. Orange 36 (Komp. A); 8 Teile Komp. B aus Synthesebeispiel 21 | FS 105 %, kein Rubout, keine Flockulation | FS 100 %, kein Rubout, keine Flockulation | FS 105 %, kein Rubout, keine Flockulation | FS 101 %, kein Rubout, keine Flockulation | FS 101 %, kein Rubout, keine Flockulation | sehr gut | Kein signifikanter Schaum beobachtet | 680 mPas | sehr gut |
| 14 | 38 Teile P. Red 122 (Komp. A); 11 Teile Komp. B aus Synthesebeispiel 16 | FS 108 %, kein Rubout, keine Flockulation | FS 105 %, kein Rubout, keine Flockulation | FS 102 %, kein Rubout, keine Flockulation | FS 105 %, kein Rubout, keine Flockulation | FS 108 %, geringer Rubout, keine Flockulation | gut | Kein signifikanter Schaum beobachtet | 641 mPas | sehr gut |
| 15 | 50 Teile P. Red 3 (Komp. A); 10 Teile Komp. B aus Synthesebeispiel 28 | FS 98 %, kein Rubout, keine Flockulation | FS 99 %, kein Rubout, keine Flockulation | FS 89 %, kein Rubout, keine Flockulation | FS 100 %, kein Rubout, keine Flockulation | FS 96 %, kein Rubout, keine Flockulation | ausreichend gut | Geringfügiges Schäumen beobachtet | 224 mPas | sehr gut |
| 16 | 35 Teile P. Violet 19 (Komp. A); 7 Teile Komp. B aus Synthesebeispiel 24 | FS 104 %, kein Rubout, keine Flockulation | FS 102 %, kein Rubout, keine Flockulation | FS 102 %, kein Rubout, keine Flockulation | FS 100 %, kein Rubout, keine Flockulation | FS 99 %, kein Rubout, keine Flockulation | sehr gut | Kein signifikanter Schaum beobachtet | 910 mPas | sehr gut |
| 17 | 50 Teile P. Red 254 (Komp. A); 8 Teile Komp. B aus Synthesebeispiel 3 | FS 101 %, kein Rubout, keine Flockulation | FS 100 %, kein Rubout, keine Flockulation | FS 102 %, kein Rubout, keine Flockulation | FS 104 %, kein Rubout, sehr geringe Flockulation | FS 102 %, kein Rubout, keine Flockulation | sehr gut | Kein signifikanter Schaum beobachtet | 509 mPas | sehr gut |
| 18 | 45 Teile P. Orange 5 (Komp. A); 12 Teile Komp. B aus Synthesebeispiel 29 | FS 100 %, kein Rubout, keine Flockulation | FS 102 %, kein Rubout, keine Flockulation | FS 105 %, geringer Rubout, keine Flockulation | FS 101 %, kein Rubout, keine Flockulation | FS 96 %, kein Rubout. keine Flockulation | sehr gut | Kein signifikanter Schaum beobachtet | 750 mPas | sehr gut |
| 19 | 48 Teile P. Red 9 (Komp. A); 7 Teile Komp. B aus Synthesebelspiel 17 | FS 98 %, kein Rubout, keine Flockulation | FS 102 %, kein Rubout, keine Flockulation | FS 100 %, kein Rubout, keine Flockulation | FS 105 %, kein Rubout, keine Flockulation | FS 99 %, kein Rubout, keine Flockulation | sehr gut | Kein signifikanter Schaum beobachtet | 381 mPas | sehr gut |
| 20 | 40 Teile P. Red 188 (Komp. A); 10,5 Teile Komp. B aus Synthesebeispiel 14 | FS 103 %, kein Rubout, keine Flockulation | FS 100 %, kein Rubout, keine Flockulation | FS 102 %, kein Rubout, keine Flockulation | FS 108 %, geringer Rubout, keine Flockulation | FS 103 %, kein Rubout, keine Flockulation | sehr gut | Kein signifikanter Schaum beobachtet | 600 mPas | sehr gut |
| 21 | 36 Teile P. Violet 23 (Komp. A); 12 Teile Komp. B aus Synthesebeispiel 23 | FS 95 %, kein Rubout, keine Flockulation | FS 96 %, kein Rubout, keine Flockulation | FS 99 %, geringer Rubout, keine Flockulation | FS 94 %, kein Rubout, keine Flockulation | FS 95 %, kein Rubout, geringe Flockulation | sehr gut | Kein signifikanter Schaum beobachtet | 163 mPas | sehr gut |
| 22 | 50 Teile P. Yellow 74 (Komp. A); 9 Teile Komp. B aus Synthesebeispiel 27 | FS 102 %, kein Rubout, keine Flockulation | FS 107 %, leichter Rubout, keine Flockulation | FS 101 %, kein Rubout, keine Flockulation | FS 102 %, kein Rubout, keine Flockulation | FS 101 %, kein Rubout, keine Flockulation | gut | Geringfügiges Schäumen beobachtet | 308 mPas | sehr gut |
| 23 | 48 Teile P. Yellow 97 (Komp. A); 10 Teile Komp. B aus Synthesebeispiel 20 | FS 100 %, kein Rubout, keine Flockulation | FS 101 %, kein Rubout, keine Flockulation | FS 103 %, kein Rubout, keine Flockulation | FS 101 %, kein Rubout, keine Flockulation | FS 96 %, kein Rubout, keine Flockulation | sehr gut | Kein signifikanter Schaum beobachtet | 461 mPas | sehr gut |
| 24 | 40 Teile P. Yellow 154 (Komp. A); 10 Teile Komp. B aus Synthesebeispiel 25 | FS 108 %, kein Rubout, keine Flockulation | FS 100 %, leichter Rubout, keine Flockulation | FS 101 %, kein Rubout, keine Flockulation | FS 98 %, kein Rubout, keine Flockulation | FS 99 %, kein Rubout, keine Flockulation | sehr gut | Kein signifikanter Schaum beobachtet | 540 mPas | gut |
| 25 | 45 Teile P. Yellow 16 (Komp. A); 12 Teile Komp. B aus Synthesebeispiel 10 | FS 99 %, kein Rubout, keine Flockulation | FS 102 %, kein Rubout, geringe Flockulation | FS 106 %, kein Rubout, keine Flockulation | FS 100 %, kein Rubout, keine Flockulation | FS 97 %, kein Rubout, keine Flockulation | sehr gut | Kein signifikanter Schaum beobachtet | 434 mPas | sehr gut |
| 26 | 42 Teile P. Red 170 (Komp. A); 10 Teile Komp. B aus Synthesebeispiel 6 | FS 101 %, kein Rubout, keine Flockulation | FS 102 %, kein Rubout, keine Flockulation | FS 102 %, kein Rubout, keine Flockulation | FS 102 %, kein Rubout, keine Flockulation | FS 99 %, kein Rubout, keine Flockulation | sehr gut | Kein signifikanter Schaum beobachtet | 807 mPas | gut |
| 27 | 45 Teile P. Red 184 (Komp. A); 8 Teile Komp. B aus Synthesebeispiel 4 | FS 100 %, kein Rubout, keine Flockulation | FS 100 %, kein Rubout, keine Flockulation | FS 100 %, kein Rubout, geringe Flockulation | FS 100 %, geringer Rub-out, keine Flockulation | FS 105 %, kein Rubout, keine Flockulation | sehr gut | Kein signifikanter Schaum beobachtet | 367 mPas | sehr gut |
| 28 | 40 Teile P. Red 188 (Komp. A); 12 Teile Komp. B aus Synthesebeispiel 11 | FS 106 %, kein Rubout, keine Flockulation | FS 100 %, kein Rubout, keine Flockulation | FS 95 %, leichter Rub-out, keine Flockulation | FS 99 %, kein Rubout, keine Flockulation | FS 104 %, kein Rubout, keine Flockulation | gut | Kein signifikanter Schaum beobachtet | 679 mPas | sehr gut |
| 29 | 41 Teile P. Violet 32 (Komp. A); 7 Teile Komp. B aus Synthesebeispiel 18 | FS 103 %, kein Rubout, keine Flockulation | FS 104 %, kein Rubout, keine Flockulation | FS 105 %, kein Rubout, keine Flockulation | FS 102 %, kein Rubout, keine Flockulation | FS 99 %, kein Rubout, keine Flockulation | gut | Kein signifikanter Schaum beobachtet | 600 mPas | gut |
| 30 | 40 Teile P. Brown 25 (Komp. A); 8 Teile Komp. B aus Synthesebeispiel 7 | FS 99 %, kein Rubout, keine Flockulation | FS 98 %, kein Rubout, keine Flockulation | FS 99 %, kein Rubout, keine Flockulation | FS 105 %, kein Rubout, keine Flockulation | FS 103 %, kein Rubout, keine Flockulation | sehr gut | Kein signifikanter Schaum beobachtet | 604 mPas | sehr gut |
| 31 | 42 Teile P. Brown 41 (Komp. A); 9 Teile Komp. B aus Synthesebelspiel 8 | FS 100 %, kein Rubout, keine Flockulation | FS 100 %, kein Rubout, leichte Flockulation | FS 103 %, kein Rubout, keine Flockulation | FS 104 %, geringer Rub-out, keine Flockulation | FS 102 %, kein Rubout, keine Flockulation | sehr gut | Kein signifikanter Schaum beobachtet | 499 mPas | sehr gut |
| 32 | 45 Teile P. Red 208 (Komp. A); 10 Teile Komp. B aus Synthesebeispiel 24 | FS 108 %, etwas Rub-out, geringe Flockulation | FS 106 %, kein Rubout, keine Flockulation | FS 102 %, kein Rubout, keine Flockulation | FS 106 %, kein Rubout, keine Flockulation | FS 95 %, kein Rubout, keine Flockulation | sehr gut | Kein signifikanter Schaum beobachtet | 816 mPas | sehr gut |
| 33 | 38 Teile P. Yellow 151 (Komp. A); 10 Teile Komp. B **aus** Synthesebeispiel 1 | FS 100 %, kein Rubout, keine Flockulation | FS 102 %, kein Rubout, keine Flockulation | FS 101 %, kein Rubout, keine Flockulation | FS 105 %, geringer Rubout, keine Flockulation | FS 102 %, kein Rubout, keine Flockulation | sehr gut | Kein signifikanter Schaum beobachtet | 260 mPas | sehr gut |
| 34 | 40 Teile P. Black 11 (Komp. A); 5 Teile Komp. B aus Synthesebeispiel 16 | FS 102 %, kein Rubout, keine Flockulation | FS 102 %, kein Rubout, keine Flockulation | FS 103 %, kein Rubout, keine Flockulation | FS 104 %, kein Rubout, keine Flockulation | FS 105 %, kein Rubout, keine Flockulation | sehr gut | Kein signifikanter Schaum beobachtet | 1588 mPas | sehr gut |
| 35 | 65 Teile P. Blue 28 (Komp. A); 5 Teile Komp. B aus Synthesebeispiel 7 | FS 99 %, kein Rubout, keine Flockulation | FS 97 %, Rubout, keine Flockulation | FS 98 %, kein Rubout, keine Flockulation | FS 99 %, kein Rubout, keine Flockulation | FS 102 %, kein Rubout, keine Flockulation | gut | Kein signifikanter Schaum beobachtet | 1890 mPas | sehr gut |
| 36 | 50 Teile P. Green 50 (Komp. A); 6 Teile Komp. B aus Synthesebelspiel 20 | FS 100 %, kein Rubout, keine Flockulation | FS 101 %, kein Rubout, keine Flockulation | FS 100 %, kein Rubout, keine Flockulation | FS 104 %, kein Rubout, keine Flockulation | FS 100 %, kein Rubout, keine Flockulation | sehr gut | leichter Schaum beobachtet | 2347 mPas | sehr gut |
| 37 | 75 Teile P. Green17 (Komp. A); 5 Teile Komp. B aus Synthesebeispiel 12 | FS 100 %, kein Rubout, keine Flockulation | FS 102 %, kein Rubout, keine Flockulation | FS 102 %, kein Rubout, keine Flockulation | FS 96 %, kein Rubout, keine Flockulation | FS 99 %, kein Rubout, keine Flockulation | sehr gut | Kein signifikanter Schaum beobachtet | 2108 mPas | sehr gut |
| 38 | 70 Teile P. Red 101 (Komp. A); 5 Teile Komp. B aus Synthesebeispiel 29 | FS 100 %, kein Rubout, keine Flockulation | FS 102 %, kein Rubout, keine Flockulation | FS 103 %, kein Rubout, keine Flockulation | FS 102 %, geringer Rubout, keine Flockulation | FS 101 %, kein Rubout, keine Flockulation | sehr gut | Kein signifikanter Schaum beobachtet | 1764 mPas | sehr gut |
| 39 | 65 Teile P. Yellow 184 (Komp. A); 8 Teile Komp. B aus Synthesebeispiel 13 | FS 98 %, kein Rubout, keine Flockulation | FS 102 %, kein Rubout, keine Flockulation | FS 105 %, kein Rubout, leichte Flockulation | FS 99 %, geringer Rub-out, keine Flockulation | FS 106 %, kein Rubout, keine Flockulation | gut | Kein signifikanter Schaum beobachtet | 2590 mPas | sehr gut |

## Patentansprüche

1. Wässrige Pigmentpräparation, enthaltend
(A) mindestens ein organisches und/oder anorganisches Pigment,
(B) ein Dispergiermittel der Formel (I), (II), (III) oder (IV) oder Mischungen der Dispergiermittel der Formeln (I), (II), (III) oder (IV) 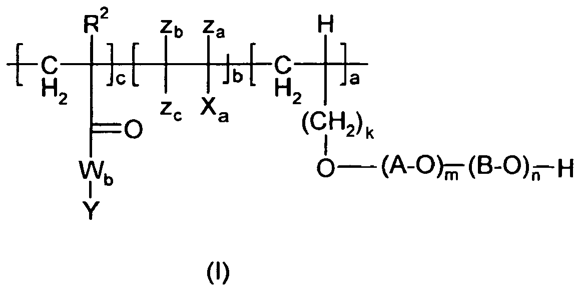 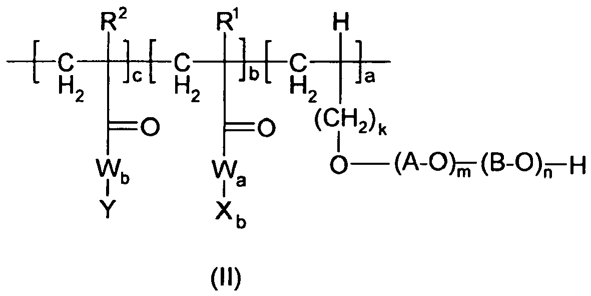 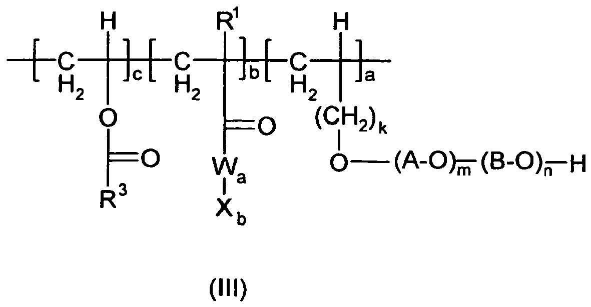 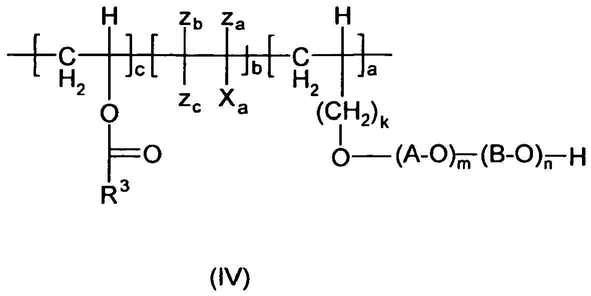 wobei die Indices a, b und c den molaren Anteil des jeweiligen Monomeren angeben:
a = 0,01 bis 0,8;
b = 0,001 bis 0,8;
c = 0,001 bis 0,8;
wobei die Summe aus a + b + c gleich 1 ist,
A für C₂- bis C₄-Alkylen und
B für ein von A unterschiedliches C₂- bis C₄-Alkylen steht,
k der Zahl 0 oder 1 entspricht,
m eine Zahl von 0 bis 500 ist;
n eine Zahl von 0 bis 500 ist,
wobei die Summe m + n gleich 1 bis 1000 ist;
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht,
Z_{c} für H oder (C₁-C₄)-Alkyl steht;
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome **N,** O und S enthält,
Wₐ für Sauerstoff oder die Gruppe NH steht,
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht,
R³ für einen Rest steht, so dass die Struktureinheit [ ]_{c} ausgewählt is aus der Gruppe bestehend aus Laurinsäurevinylester, Myristinsäurevinylester, Stearinsäurevinylester, Behensäure-, Pivalinsäure-, Neohexansäure-, Neoheptansäure-, Neooctansäure-, Neononansäure- und Neodecansäurevinylester;
(C) gegebenenfalls Benetzer,
(D) gegebenenfalls weitere Tenside und/oder Dispergiermittel,
(E) gegebenenfalls ein oder mehrere organische Lösemittel und/oder eine oder mehrere hydrotrope Substanzen,
(F) gegebenenfalls weitere zur Herstellung wässriger Pigmentdispersionen übliche Zusatzstoffe, und
(G) Wasser.

2. Pigmentpräparation nach Anspruch 1, enthaltend 5 bis 80 Gew.-% der Komponente (A).

3. Pigmentpräparation nach Anspruch 1 oder 2, enthaltend 0,1 bis 30 Gew.-% der Komponente (B).

4. Pigmentpräparation nach mindestens einem der Ansprüche 1 bis 3, **gekennzeichnet durch** folgende Zusammensetzung der Komponenten (A) bis (G):
(A) 5 bis 80 Gew.-%,
(B) 0,1 bis 30 Gew.-%,
(C) 0 bis 10 Gew.-%,
(D) 0 bis 20 Gew.-%,
(E) 0 bis 30 Gew.-%,
(F) 0 bis 20 Gew.-%,
(G) 1 bis 90 Gew.-% Wasser,
jeweils bezogen auf das Gesamtgewicht der Pigmentpräparation.

5. Pigmentpräparation nach mindestens einem der Ansprüche 1 bis 4,
**gekennzeichnet durch** folgende Zusammensetzung der Komponenten (A) bis (G):
(A) 10 bis 70 Gew.-%
(B) 2 bis 15 Gew.-%,
(C) 0,1 bis 5 Gew.-%,
(D) 1 bis 10 Gew.-%,
(E) 5 bis 20 Gew.-%,
(F) 0,1 bis 5 Gew.-%,
(G) 10 bis 70 Gew.-% Wasser,
jeweils bezogen auf das Gesamtgewicht der Pigmentpräparation.

6. Pigmentpräparation nach mindestens einem der Ansprüche 1 bis 5, **dadurch gekennzeichnet, dass** das organische Pigment von Komponente (A) ein Monoazo-, Disazo-, verlacktes Azo-, β-Naphthol-, Naphthol AS-, Benzimidazolon-, Disazokondensations-, Azo-Metallkomplex-Pigment oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße ist.

7. Pigmentpräparation nach mindestens einem der Ansprüche 1 bis 6, **dadurch gekennzeichnet, dass** in Komponente (B) die Alkylenoxideinheiten (A-O)ₘ und (B-O)ₙ blockartig angeordnet sind.

8. Verfahren zur Herstellung einer Pigmentpräparation nach mindestens einem der Ansprüche 1 bis 7, **dadurch gekennzeichnet, dass** man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltende wässrige Pigmentdispersion mit Wasser (G) verdünnt;
oder die Komponenten (B) vorgibt und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird.

9. Verwendung einer Pigmentpräparation nach einem oder mehreren der Ansprüche 1 bis 7 zum Pigmentieren natürlicher oder synthetischer Materialien.

10. Verwendung nach Anspruch 9 zum Pigmentieren von wässrigen Anstrichmitteln, Dispersions- und Lackfarben, wasserverdünnbaren Lacken, Tapetenfarben und Druckfarben.

11. Verwendung nach Anspruch 9 zum Pigmentieren von natürlichen und synthetischen Fasermaterialien, Cellulosefasern, zur Papiermassefärbung und Laminateinfärbung sowie zur Herstellung von Drucktinten, Ink-Jet-Tinten, elektrophotographischen Tonern, Pulverlacken, Farbfiltern, elektronischen Tinten und "Electronic Paper", Color Filter, Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibern, Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

## Claims

1. An aqueous pigment preparation comprising
(A) at least one organic and/or inorganic pigment,
(B) a dispersant of formula (I), (II), (III) or (IV) or mixtures of dispersants of formulae (I), (II), (III) or (IV) 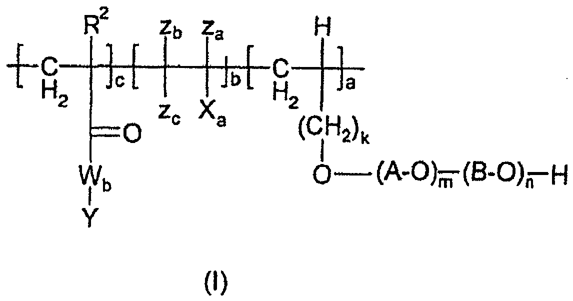 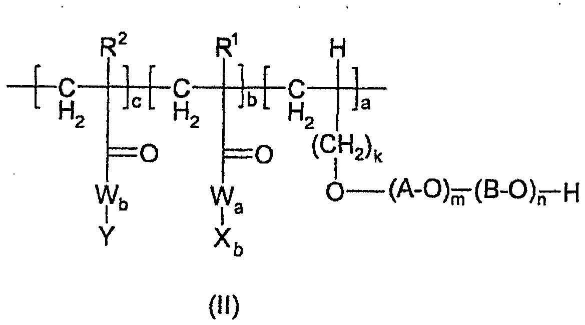 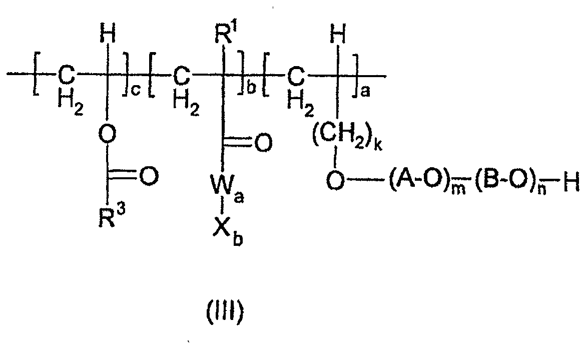 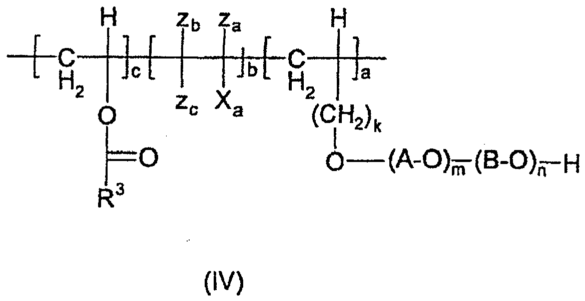 where the indices a, b and c indicate the molar fraction of the respective monomers:
a = 0.01 to 0.8;
b = 0.001 to 0.8;
c = 0.001 to 0.8;
provided the sum total of a + b + c is 1,
A represents C₂- to C₄-alkylene and
B represents a C₂- to C₄-alkylene other than A,
k equals 0 or 1,
m is from 0 to 500;
n is from 0 to 500,
provided the sum total of m + n is from 1 to 1000;
Xₐ represents an aromatic or araliphatic radical having 3 to 30 carbon atoms which optionally contains one or more of the hetero atoms N, O and S,
Zₐ represents H or (C₁-C₄)-alkyl,
Z_{b} represents H or (C₁-C₄)-alkyl,
Z_{c} represents H or (C₁-C₄)-alkyl;
R¹ represents hydrogen or methyl,
X_{b} represents an aromatic or araliphatic radical having 3 to 30 carbon atoms which optionally contains one or more of the hetero atoms N, O und S,
Wₐ represents oxygen or an NH group,
R² represents hydrogen or methyl,
Y represents an aliphatic hydrocarbyl radical having 1 to 30 carbon atoms, preferably 6 to 30, particularly 9 to 20 carbon atoms, which may be linear or branched or else cyclic, and which may contain hetero atoms O, N and/or S and may also be unsaturated,
W_{b} represents oxygen or an NH group;
R³ represents a radical such that the structural unit [ ]_{c} is selected from the group consisting of vinyl laurate, vinyl myristate, vinyl stearate, vinyl behenate, vinyl pivalate, vinyl neohexanoate, vinyl neoheptanoate, vinyl neooctanoate, vinyl neononanoate and vinyl neodecanoate;
(C) optionally wetters,
(D) optionally further surfactants and/or dispersants,
(E) optionally one or more organic solvents and/or one or more hydrotropic substances,
(F) optionally further additive materials customary for preparing aqueous pigment dispersions, and
(G) water.

2. The pigment preparation as claimed in claim 1, comprising 5% to 80% by weight of said component (A).

3. The pigment preparation as claimed in claim 1 or 2, comprising 0.1% to 30% by weight of said component (B).

4. The pigment preparation as claimed in at least one of claims 1 to 3, **characterized by** the following composition of said components (A) to (G):
(A) 5% to 80% by weight,
(B) 0.1 % to 30% by weight,
(C) 0% to 10% by weight,
(D) 0% to 20% by weight,
(E) 0% to 30% by weight,
(F) 0% to 20% by weight,
(G) 1% to 90% by weight of water, all based on the total weight of said pigment preparation.

5. The pigment preparation as claimed in at least one of claims 1 to 4, **characterized by** the following composition of said components (A) to (G):
(A) 10% to 70% by weight,
(B) 2% to 15% by weight,
(C) 0.1% to 5% by weight,
(D) 1% to 10% by weight,
(E) 5% to 20% by weight,
(F) 0.1 % to 5% by weight,
(G) 10% to 70% by weight of water,
all based on the total weight of said pigment preparation.

6. The pigment preparation as claimed in at least one of claims 1 to 5, wherein the organic pigment of said component (A) is a monoazo, disazo, laked azo, β-naphthol, Naphthol AS, benzimidazolone, disazo condensation, azo metal complex pigment or a polycyclic pigment from the group of the phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or carbon blacks.

7. The pigment preparation as claimed in at least one of claims 1 to 6, wherein the alkylene oxide units (A-O)ₘ and (B-O)ₙ are arranged blocklike in said component (B).

8. A process for producing a pigment preparation as claimed in at least one of claims 1 to 7, which comprises dispersing said component (A) in the form of powder, granulate or aqueous presscake in the presence of water (G) and also said components (B) and optionally (C) and (D), then optionally admixing water (G) and also optionally one or more of said components (E) and (F) and optionally diluting the resulting aqueous pigment dispersion with water (G);
or said components (B) being precharged and optionally one or more of said components (C), (D), (E) and (F) being initially mixed and homogenized, then said component (A) being stirred into the initially charged mixture, said component (A) being incipiently pasted and predispersed.

9. The use of a pigment preparation as claimed in one or more of claims 1 to 7 for pigmenting natural or synthetic materials.

10. The use as claimed in claim 9 for pigmenting aqueous paints, dispersion and varnish colors, water-thinnable varnishes, wallpaper colors and printing colors.

11. The use as claimed in claim 9 for pigmenting natural and synthetic fiber materials, cellulose fibers, for paper pulp coloration and for laminate coloration and also for production of printing inks, ink-jet inks, electrophotographic toners, powder coatings, color filters, electronic inks and "electronic paper", color filters, wood preservation systems, viscose dope dyeing, sausage casings, seed, fertilizers, glass bottles, and also for mass coloration of roof shingles, in coloration for renders, concrete, wood stains, colored pencil leads, felt tip pens, waxes, paraffins, graphics inks, ballpoint pen pastes, chalks, washing and cleaning compositions, shoe care agents, latex products, abrasives, and also for coloration of plastics.

## Revendications

1. Préparation aqueuse pigmentaire, contenant
(A) au moins un pigment organique et/ou inorganique,
(B) un dispersant des formules (I), (II), (III) ou (IV) ou des mélanges des dispersants des formules (I), (II), (III) ou (IV) 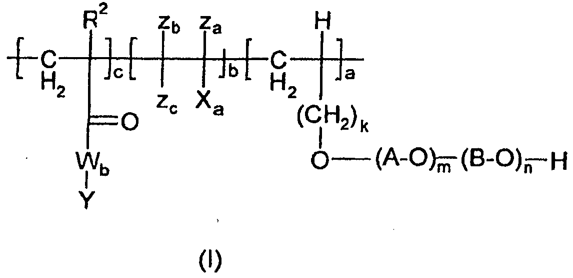 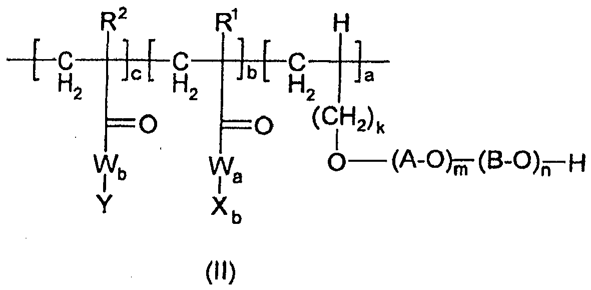 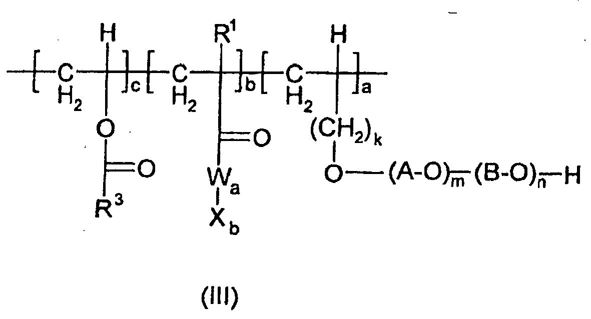 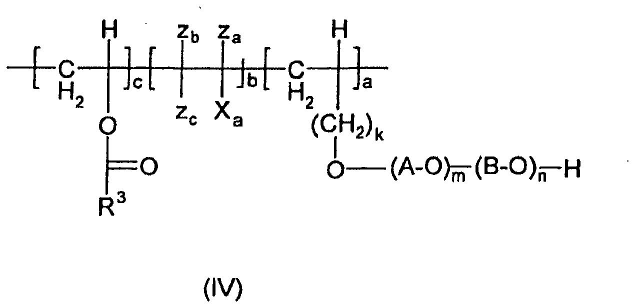 où les indices a, b et c indiquent la proportion molaire de chaque monomètre :
a = 0,01 à 0,8 ;
b = 0,001 à 0,8 ;
c = 0,001 à 0,8 ;
où la somme de a + b + c est égale à 1 ;
A représente C₂-C₄-alkylène et
B représente C₂-C₄-alkylène différent de A,
k correspond au nombre 0 ou 1,
m vaut un nombre de 0 à 500,
n vaut un nombre de 0 à 500,
où la somme de m + n est égale à 1 à 1000 ;
Xₐ représente un radical aromatique ou araliphatique comprenant 3 à 30 atomes de carbone, qui contient le cas échéant un ou plusieurs des hétéroatomes N, O et S,
Zₐ représente H ou (C₁-C₄)-alkyle,
Z_{b} représente H ou (C₁-C₄)-alkyle,
Z_{c} représente H ou (C₁-C₄)-alkyle ;
R¹ représente hydrogène ou méthyle,
X_{b} représente un radical aromatique ou araliphatique comprenant 3 à 30 atomes de carbone, qui contient le cas échéant un ou plusieurs des hétéroatomes N, O et S,
Wₐ représente oxygène ou le groupe NH,
R² représente hydrogène ou méthyle,
Y représente un radical hydrocarboné aliphatique comprenant 1 à 30 atomes de carbone, qui peut être linéaire ou ramifié ou également cyclique et qui peut contenir les hétéroatomes O, N et/ou S et qui peut également être insaturé,
W_{b} représente oxygène ou le groupe NH,
R³ représente un radical de telle sorte que l'unité de structure [ ]_{c} est choisie dans le groupe constitué par l'ester vinylique de l'acide laurique, l'ester vinylique de l'acide myristique, l'ester vinylique de l'acide stéarique, les esters vinyliques de l'acide béhénique, de l'acide pivalique, de l'acide néohexanoïque, de l'acide néoheptanoïque, de l'acide néooctanoïque, de l'acide néononanoïque et de l'acide néodécanoïque ;
(C) le cas échéant un mouillant,
(D) le cas échéant d'autres agents tensioactifs et/ou dispersants,
(E) le cas échéant un ou plusieurs solvants organiques et/ou une ou plusieurs substances hydrotropes,
(F) le cas échéant d'autres additifs usuels pour la préparation de dispersions aqueuses pigmentaires, et
(G) de l'eau.

2. Préparation pigmentaire selon la revendication 1, contenant 5 à 80% en poids du composant (A).

3. Préparation pigmentaire selon la revendication 1 ou 2, contenant 0,1 à 30% en poids du composant (B).

4. Préparation pigmentaire selon au moins l'une quelconque des revendications 1 à 3, **caractérisée par** la composition suivante des composants (A) à (G) :
(A) 5 à 80% en poids,
(B) 0,1 à 30% en poids,
(C) 0 à 10% en poids,
(D) 0 à 20% en poids,
(E) 0 à 30% en poids,
(F) 0 à 20% en poids,
(G) 1 à 90% en poids d'eau,
à chaque fois par rapport au poids total de la préparation pigmentaire.

5. Préparation pigmentaire selon au moins l'une quelconque des revendications 1 à 4, **caractérisée par** la composition suivante des composants (A) à (G) :
(A) 10 à 70% en poids
(B) 2 à 15% en poids,
(C) 0,1 à 5% en poids,
(D) 1 à 10% en poids,
(E) 5 à 20% en poids,
(F) 0,1 à 5% en poids,
(G) 10 à 70% en poids d'eau,
à chaque fois par rapport au poids total de la préparation pigmentaire.

6. Préparation pigmentaire selon au moins l'une quelconque des revendications 1 à 5, **caractérisée en ce que** le pigment organique du composant (A) est un pigment monoazo, diazo, azo laqué, ß-naphtol, naphtol AS, benzimidazolone, diazo-condensation, azo-complexe métallique ou un pigment polycyclique du groupe des pigments de type phtalocyanine, quinacridone, pérylène, périnone, thio-indigo, anthanthrone, anthraquinone, flavanthrone, indanthrone, isoviolanthrone, pyranthrone, dioxazine, quinophtalone, iso-indolinone, iso-indoline et dicétopyrrolopyrrole ou des suies.

7. Préparation pigmentaire selon au moins l'une quelconque des revendications 1 à 6, **caractérisée en ce que** dans le composant (B) les unités oxyde d'alkylène (A-O)ₘ et (B-O)ₙ sont disposées en blocs.

8. Procédé pour la production d'une préparation pigmentaire selon au moins l'une quelconque des revendications 1 à 7, **caractérisé en ce qu'**on disperse le composant (A) sous forme de poudre, de granulat ou de gâteau de presse aqueux en présence d'eau (G) ainsi que des composants (B) et le cas échéant (C) et (D), ensuite, on y mélange le cas échéant de l'eau (G), ainsi que le cas échéant un ou plusieurs des composants (E) et (F) et on dilue le cas échéant la dispersion pigmentaire aqueuse obtenue avec de l'eau (G) ;
ou dispose au préalable les composants (B) et on y mélange et homogénéise d'abord le cas échéant un ou plusieurs des composants (C), (D), (E) et (F), puis on délaye le composant (A) dans le mélange disposé au préalable, le composant (A) étant gâché et prédispersé.

9. Utilisation d'une préparation pigmentaire selon l'une ou plusieurs des revendications 1 à 7 pour la pigmentation de matériaux naturels ou synthétiques.

10. Utilisation selon la revendication 9 pour la pigmentation d'enduits aqueux, de peintures dispersées et de peintures laques, de laques diluables à l'eau, d'encres pour tapis et d'encres d'imprimerie.

11. Utilisation selon la revendication 9 pour la pigmentation de matériaux fibreux naturels et synthétiques, de fibres de cellulose, pour la teinture de pâte à papier et la teinture de stratifiés ainsi que pour la production d'encres d'imprimerie, d'encres pour jet d'encre, de toners électrophotographiques, de laques en poudre, de filtres colorés, d'encres électroniques et de "papier électronique", de filtres couleurs, de systèmes de protection du bois, pour la teinture par filage de viscose, pour la production de boyaux de saucisse, de semences, d'engrais, de bouteilles en verre ainsi que pour la teinture en masse de tuiles, pour la teinture d'enduits, de béton, de teintures pour bois, de mines de crayons de couleur, de feutres, de cires, de paraffines, d'encres de Chine, de pâtes pour stylos à bille, de craies, d'agents de lavage et de nettoyage, de produits d'entretien de chaussures, de produits en latex, d'abrasifs ainsi que pour la teinture de matériaux synthétiques.
